# EUROPÄISCHE PATENTANMELDUNG

(11) **EP 1 243 988 A1**
(43) Veröffentlichungstag der Anmeldung: **25.09.2002**
(21) Anmeldenummer: 01107316.0
(22) Anmeldetag: 23.03.2001
(51) Int. Cl.: G05B 19/05, G05B 19/042

(54) **Verfahren zur Verringerung des Programmieraufwandes bei einer speicherprogrammierbaren Steuerung mit Zentraleinheit und Bedienungsgerät**

(71) Anmelder: SIEMENS AKTIENGESELLSCHAFT, 80333 München (DE)
(72) Erfinder: Beck, Hans-Joachim, 76287 Rheinstetten (DE); Bremer-Hurrle, Karla, 76870 Kandel (DE); Dreher, Michael, 71229 Leonberg (DE); Hammon, Harald, 90471 Nürnberg (DE); Heise, Oliver, 92318 Neumarkt (DE); Kistner, Andreas, 76287 Rheinstetten-Mörsch (DE); Schmidt, Gerhard, 92318 Neumarkt (DE)

(57) **Zusammenfassung**

Die Erfindung richtet sich auf ein Verfahren zur Verringerung des Aufwandes im Fall einer Modifikation des Steuerungscodes für die Zentraleinheit einer speicherprogrammierbaren Steuerung mit wenigstens einem angeschlossenen Bedienungsgerät, von dem bei einer Fehlermeldung eine Diagnose hinsichtlich der Fehlerursache durchführbar ist, wobei in der Zentraleinheit zusätzliche Informationen über den Steuerungscode hinterlegt sind und insbesondere bei einer Fehlermeldung von einem angeschlossenen Bedienungsgerät auslesbar sind, um die Fehlerursache zu ermitteln.

## Beschreibung

Die Erfindung richtet sich auf ein Verfahren zur Verringerung des Aufwandes im Fall einer Modifikation des Steuerungscodes für die Zentraleinheit einer speicherprogrammierbaren Steuerung mit wenigstens einem angeschlossenen Bedienungsgerät, von dem bei einer Fehlermeldung eine Diagnose hinsichtlich der Fehlerursache durchführbar ist.

Speicherprogrammierbare Steuerungen haben in nahezu allen Industriezweigen den automatischen Ablauf der verschiedensten Funktionen möglich gemacht und erfüllen die übertragenen Aufgaben im Allgemeinen mit einer höheren Präzision als dies mit einem manuellen Betrieb erreichbar wäre. Andererseits sind auch die modernsten Anlagen nicht vor Störungen gefeit, und in diesen Fällen kann von der Steuerung allenfalls eine rasche Stillsetzung der betroffenen Anlagenteile herbeigeführt werden und sodann eine Fehlermeldung generiert werden, um technisch geschultes Personal zur Behebung des Fehlers herbeizurufen. Eine weitere Hilfestellung kann die Steuerung bei der Suche nach der Fehlerursache leisten, wo im Rahmen eines Diagnoseprogrammes anhand der im Zeitpunkt des Fehlereintritts aufgezeichneten Sensorsignale das die Fehlermeldung ursächlich herbeiführende Signal herausgefunden und angezeigt werden kann. Ein derartiges Fehlerdiagnoseprogramm wird üblicherweise nicht in der Zentraleinheit der speicherprogrammmierbaren Steuerung durchgeführt, sondern in einem angeschlossenen Bedienungsgerät mit eigener Intelligenz, dem oftmals während des Normalbetriebes die Anzeige von Informationen über den Prozeß sowie ggf. die Modifikation von Prozeßparametern übertragen ist. Um die betreffenden Informationen bzw. Eingabemöglichkeiten an allen wichtigen Bereichen einer Anlage zur Verfügung zu haben, sind oftmals eine größere Anzahl derartiger Bedienungsgeräte an einer gemeinsamen Steuerung angeschlossen, wobei sodann auch die Fehlerdiagnose üblicherweise an jedem dieser Bedienungsgeräte vorgenommen werden kann. Deshalb muss ein entsprechendes Diagnoseprogramm samt aller, in der betreffenden Steuerung implementierter Steuer- und/oder Regelargorhitmen in jedem der angeschlossenen Bedienungsgeräte abgespeichert sein. Dies wird üblicherweise dadurch herbeigeführt, dass nach Erstellung des vollständigen Steuerungsprogrammes das Diagnoseprogramm und die hierfür benötigten Daten von einem speziellen Programm generiert und sodann einzeln in sämtliche Bedienungsgeräte geladen werden. Bei der erstmaligen Initialisierung der Komponenten einer Steuerung ist ein derartiges Vorgehen durchaus möglich; es hat sich jedoch insbesondere bei komplexeren Steuerungs- und/oder Regelungsaufgaben herausgestellt, dass die erstmalige Erstellung eines Steuerprogramms meistens nicht ausreichend ist, sondern dass anschließend in der Praxis und vor Ort oftmals noch eine Vielzahl von Optimierungen vorgenommen werden müssen, um das reibungslose Zusammenwirken aller Anlagenteile sicherzustellen. Dabei hat es sich als störend erwiesen, dass bei jeder noch so geringfügigen Änderung der Steuer- und/oder Regelungsstruktur auch die von dem Diagnoseprogramm benötigten Informationen über die Steueralgorithmen verändert und dann wieder in jedes einzelne Bedienungsgerät geladen werden müssen. Während bspw. die Änderung in dem Steuerungsprogramm selbst bspw. in einigen Minuten abgeschlossen werden kann, so erfordert die Neuzusammenstellung der diagnoserelevanten Daten und insbesondere das Laden derselben in sämtliche Bedienungsgeräte oftmals mehr als eine Stunde. Da gerade während der Inbetriebnahmephase einer neuen Steuerung oftmals täglich mehrere Modifikationen des Steuerungsprogramms erforderlich sind, so bedeutet das eine erhebliche Belastung für das Inbetriebnahmepersonal. Dies wiegt um so mehr, als u. U. zwar das Programm für das Steuerungsgerät selbst evtl. über eine Kommunikationsschnittstelle geladen werden kann, ohne dass sich hierzu das Inbetriebnahmepersonal vor Ort begeben muss, während die Bedienungsgeräte zumeist nicht über entsprechende Schnittstellen verfügen und aus diesem Grund dennoch die Präsenz des Bedienungspersonals vor Ort bedingen.

Aus diesen Nachteilen des bekannten Stands der Technik resultiert das die Erfindung initiierende Problem, eine Möglichkeit zu schaffen, wie bei gattungsgemäßen, speicherprogrammierbaren Steuerungen der für eine Fehlerdiagnose relevante Dateninhalt angeschlossener Bedienungsgeräte bei Änderungen des eigentlichen Steuerungsprogrammes ohne Zusatzaufwand angepaßt werden kann.

Die Lösung dieses Problems gelingt dadurch, dass in der Zentraleinheit zusätzliche Informationen über den Steuerungscode hinterlegt sind und insbesondere bei einer Fehlermeldung von einem angeschlossenen Bedienungsgerät auslesbar sind, um die Fehlerursache zu ermitteln.

Hierbei geht die Erfindung aus von der Erkenntnis, dass der Steuerungscode moderner, speicherprogrammierbarer Steuerungen aus einem Quellcode durch Compilierung erstellt und dabei üblicherweise zur Verringerung des Speicherplatzbedarfs optimiert ist, so dass aus einem derartigen Maschinencode das eigentliche Steuerprogramm mit vertretbarem Aufwand nicht mehr erkennbar ist. Es ist daher nicht möglich, dass sich die Bedienungsgeräte die erforderlichen Informationen über die Steueralgorithmen direkt aus dem in der Zentraleinheit niedergelegten Steuerungscode beschaffen. Statt dessen sieht die Erfindung vor, dass parallel bzw. neben dem eigentlichen, von der Steuerung abgearbeiteten Steuerungscode Informationen über die dabei abgearbeiteten Algorithmen in einer verständlich gegliederten, bspw. etwa dem Quellcode nachempfundenen Form, in der Zentraleinheit bzw. einer angeschlossenen Speicherbaugruppe derselben hinterlegt sind, von wo sodann die angeschlossenen Bedienungsgeräte insbesondere bei Eintreten eines Fehlers die zu dessen Diagnose erforderlichen Informationen in verständlicher bzw. eben für die Fehlerdiagnose optimierter Form vorfinden. Ggf. kann durch eine Vorabanfrage festgestellt werden, ob bei dem für eine aktuelle Fehlerdiagnose relevanten Teil des Steuerungsnetzwerkes seit der ursprünglichen Initialisierung der gesamten Steuerung eine Änderung eingetreten ist, und in diesem Falle kann auch der entsprechend mit veränderte Diagnosecode aus der Zentraleinheit in das betreffende Bedienungsgerät geladen werden, um die Fehlerdiagnose stets anhand der aktuellen Steuerungsalgorithmen durchführen zu können. Da solchermaßen die nachträglichen Änderungen eines Steuerungsprogramms im Fehlerfall für jedes Bedienungsgerät erkennbar und damit bei der Fehlerdiagnose nachvollziehbar sind, ist es nicht mehr erforderlich, bei jeder Änderung des Steuerungscodes auch die für die Diagnose eines entsprechenden Fehlers relevanten Daten modifizieren und in die Bedienungsgeräte laden zu müssen. Im Idealfall bedeutet dies, dass eine nachträgliche Modifikation des Steuerungscodes bei einer Schnittstelle der Steuerungsanlage zu einem Kommunikationsnetz auch von einem weit entfernten Ort aus durchgeführt werden kann, ohne dass dabei die für eine Fehlerdiagnose durch angeschlossene Bedienungsgeräte relevanten Daten in eben diesen Bedienungsgeräten zu veralten drohten. Somit kann das Inbetriebnahmepersonal von wiederholten und zeitraubenden Anreisen zu einer bereits in Betrieb genommenen Anlage entlastet werden und sich deshalb zwischenzeitlich bereits neuen Aufgaben widmen.

Es hat sich als günstig erwiesen, dass die zusätzlichen Informationen den logischen und/oder mathematischen Verknüpfungen des Steuerungscodes inhaltlich entsprechen. Die zusätzlich in der Zentraleinheit der speicherprogrammierbaren Steuerung abgelegten Informationen sollten anstelle des für eine Fehlerauswertung ungeeigneten Steuerungs-Maschinencodes dieselben dabei abgearbeiteten Algorithmen in einer übersichtlichen und daher auswertbaren Form enthalten, so dass hier zumindest bei für die Diagnose relevanten Teilen des Steuerungsnetzwerks eine 1:1-Beziehung zwischen dem aktuellen Steuerungs-Maschinencode und den zusätzlich abgespeicherten Informationen realisiert ist.

Erfindungsgemäß ist weiterhin vorgesehen, dass die zusätzlichen Informationen die Abhängigkeit eines Ausgangs- insbesondere Meldesignals von den Eingangssignalen enthalten. Zwar könnten die zusätzlichen Informationen auf einfachstem Weg dadurch gewonnen werden, dass der Quellcode des Steuerungsprogramms parallel zu dem compilierten Maschinencode in die Zentralbaugruppe eingespeichert wird. Jedoch ist ein derartiger Quellcode in mancherlei Hinsicht für eine Fehlerdiagnose optimierungsbedürftig. Ein wichtiger Gesichtspunkt hierbei ist, dass die Fehlerdiagnose nicht wie die normale Abarbeitung des Steuerungscodes zyklisch entsprechend der Programmierungsreihenfolge der einzelnen Steuerungsnetzwerke bzw. Anweisungen vorgenommen wird, sondern von der aktuellen Fehlermeldung ausgehend deren Ursache möglichst bis zu den Eingangssignalen von bspw. in der Anlage verteilt angeordneten Sensoren zurückverfolgt wird, da deren Signalzustände im Zeitpunkt des Fehlereintritts von der speicherprogrammierbaren Steuerung eben für eine derartige Fehlerdiagnose abgespeichert wurden. Es kann sich daher als äußerst schwierig erweisen, eine Vielzahl von miteinander bspw. über gemeinsame Merker gekoppelten Anweisungen sukzessive zurückzuverfolgen, und deshalb kann bereits bei der Generierung bzw. Hinterlegung der vor allem für eine Fehlerdiagnose relevanten Zusatzinformationen über die Steuerungsalgorithmen eine Optimierung dahingehend herbeigeführt werden, dass über Zwischenergebnisse bzw. -merker aneinandergekoppelte Anweisungen, welche Einfluß auf ein für die Fehlerdiagnose relevantes Signal haben können, zu derartigen Gesamtfunktionen zusammengefaßt werden, die keine Zwischenergebnisse bzw. -merker aufweisen, sondern ausschließlich auf die Eingangssignale der Steuerung zurückbezogen sind. Dadurch kann im Rahmen der Fehlerdiagnose mit einem einzigen Berechnungsdurchgang und damit in einem kürzest möglichen Zeitraum und jeweils schlüssig, d. h. zweifelsfrei, die Ursache des betreffenden Fehlers zumindest bis zu dem betreffenden Eingangssignal der Steuerung zurückverfolgt werden. Hierbei wird ein evtl. komplexerer Rechenvorgang bereits vorab von einem ggf. leistungsfähigeren Projektierungscomputer durchgeführt, so dass das für die Fehlerdiagnose verwendete Bedienungsgerät nur einfache arithmetischlogische Operationen auszuführen hat.

Weitere Vorzüge ergeben sich dadurch, dass jeder Änderung der zusätzlichen Informationen ein Zeitstempel zugeordnet wird. Die zusätzlichen, in der Zentraleinheit einer speicherprogrammierbaren Steuerung hinterlegten Informationen werden stets gleichzeitig mit einer Änderung des eingespeicherten Steuerungs-Maschinencodes aktualisiert, damit sogleich nach einem Neustart der Steuerung auch die für eine Fehlerdiagnose relevanten Daten aktuell sind. Da andererseits gerade wegen der Inbetriebnahmephase häufig und an den unterschiedlichsten Stellen eines Steuerungsprogramms Änderungen vorgenommen werden müssen, sollte für ein angeschlossenes Bedienungsgerät jederzeit erkennbar sein, ob gerade der für eine bestimmte, aktuell vorzunehmende Fehlerdiagnose relevante Diagnosealgorithmus modifiziert wurde und daher neu aus der Zentraleinheit beschafft werden muss oder ob der in dem Bedienungsgerät bereits vorhandene Diagnosecode noch aktuell ist und daher direkt verwendet werden kann. Eine derartige Information über die Aktualität zusätzlicher Informationen, insbesondere eines Diagnosealgorithmus, ist anhand eines Aktualitätskennzeichens und/oder Zeitstempels möglich, der bei jeder Änderung eines bestimmten Diagnosealgorithmus für diesen oder für eine Gruppe solcher Algorithmen neu vergeben oder bspw. durch Inkrementierung des alten Wertes berechnet wird. Ein derartiges Aktualitätskennzeichen zeigt dem Bedienungsgerät an, ob eine Aktualisierung seiner Diagnosedaten im Fehlerfall erforderlich ist.

Es hat sich bewährt, dass von einem Bediengerät beim Eintreffen einer Fehlermeldung die dem betreffenden Fehlersignal zugeordneten Zusatzinformationen, insbesondere dessen Abhängigkeit von den Eingangssignalen, ausgelesen werden können, um durch eine Auswertung anhand der in dem Rechenzyklus, in welchem der Fehler erstmals aufgetreten ist, abgespeicherten Signalwerte (Erstwerte) die Fehlerursache ermitteln zu können. Solchenfalls kann das Bedienungsgerät in einem kürzesten Zeitraum anhand der für die Fehlerdiagnose optimierten Zusatzinformationen sowie anhand der betreffenden Signal-Erstwerte die Fehlerursache auf einen bestimmten Anlagenteil eingrenzen, so dass ein Techniker bspw. durch Austauschen des defekten Teiles die Anlage schnell wieder in einen betriebstauglichen Zustand versetzen kann.

Beim Eintreffen einer Fehlermeldung kann anhand einer zugeordneten Kennzahl die Ordnungszahl der entsprechenden Ableitungsregel von den Eingangssignalen ermittelt werden. Bspw. durch die Art einer eintreffenden Fehlermeldung bzw. anhand einer mitübertragenen Kennzahl (Attribut) kann in dem betreffenden Bedienungsgerät unschwer die für die Diagnose dieses Fehlers relevante Ableitungsregel von den Eingangssignalen (Diagnosenetzwerk) ermittelt und sodann zunächst deren Aktualität durch eine Anfrage bei der Zentraleinheit der betreffenden Steuerung überprüft werden, um sodann - ggf. nach Aktualisierung - anhand der zugeordneten und von der Zentraleinheit der Steuerung ebenfalls auslesbaren Signal-Erstwerte eine Auswertung dieses Fehlers vornehmen zu können.

Die Erfindung bietet ferner die Möglichkeit, dass anhand des Attributs der Fehlermeldung und/oder der Ordnungszahl der gesuchten Ableitungsregel der entsprechende, in dem Bedienungsgerät eingetragene Aktualitäts- oder Zeitstempel mit einem diesbezüglich in der Zentraleinheit eingetragenen Aktualitäts- oder Zeitstempel verglichen wird. Diese Maßnahme liefert ein untrügliches Kriterium für die Aktualität der gegenwärtig in dem Bedienungsgerät vorhandenen Diagnose-Ableitungsregel bzw. -netzwerk und sagt dem Bedienungsgerät sofort, ob eine weitere Aktualisierung erforderlich ist.

Bevorzugt wird bei Identität der miteinander verglichenen Aktualitäts- oder Zeitstempel die bereits in dem Bedienungsgerät abgespeicherte Ableitungsregel zur Auswertung der Fehlermeldung anhand der Erstwerte herangezogen. Solchenfalls kann die Übertragung größerer Datenmengen eines Diagnosenetzwerks unterbleiben, wenn bereits die aktuelle Fassung in dem betreffenden Bediengerät abgespeichert ist.

Ein weiteres, erfindungsgemäßes Merkmal liegt darin, dass bei einer Diskrepanz zwischen den miteinander verglichenen Aktualitäts- oder Zeitstempeln die (aktuellere) Ableitungsregel aus der Zentraleinheit gelesen wird. Die solchenfalls eingelesene, aktuellere Diagnoseregel bzw. Diagnosealgorithmus wird zunächst in dem betreffenden Bedienungsgerät gespeichert, um bei später eintreffenden, identischen Fehlermeldungen eine nochmalige Datenübertragung einsparen zu können, falls zwischenzeitlich keine weiteren Änderungen des betreffenden Steuerungscodesegments vorgenommen wurden. Erst dann wird anhand des nun aktualisierten Diagnosecodes die Ursache des aktuellen Fehlers ermittelt und angezeigt.

Die Erfindung lässt sich dadurch ergänzen, dass bei dem Auslesen einer Ableitungsregel aus der Zentraleinheit deren Aktualitäts- oder Zeitstempel in das Bedienungsgerät übernommen wird. Indem bei einer Aktualisierung einer diagnoserelevanten Zusatzinformation in einem Bedienungsgerät auch der zugeordnete Aktualitäts- oder Zeitstempel mit übertragen und in dem Bedienungsgerät abgespeichert wird, kann zu einem späteren Zeitpunkt anhand eines Vergleichs dieses Kriteriums mit dem betreffenden Aktualitäts- oder Zeitstempel in der Zentraleinheit der Steuerungseinrichtung entschieden werden, ob eine abermalige Aktualisierung erforderlich ist.

Es liegt im Rahmen der Erfindung, dass bei der erstmaligen Programmierung aller Systemkomponenten die für eine Meldungsauswertung erforderlichen Ableitungsregeln direkt in alle Bedienungsgeräte geladen werden. Bei der erstmaligen Initialisierung aller an eine speicherprogrammierbare Steuerung angeschlossenen Bedienungsgeräte müssen ohnehin die von diesen Geräten auszuführenden Grundfunktionen in dem dortigen Speicher hinterlegt werden, so dass es keinen Zusatzaufwand erfordert, hierbei die erstmals erstellten Diagnosenetzwerke gleichzeitig mit in die Bedienungsgeräte zu übertragen. Dennoch wird auch in diesem Fall die darauf bezogene Zusatzinformation vorzugsweise gleichzeitig mit in der Zentraleinheit der betreffenden, speicherprogrammierbaren Steuerung hinterlegt, um dort eine entsprechende Verwaltungsstruktur anzulegen, die bspw. bei einer künftigen Anfrage eines Bedienungsgerätes bei einer nachträglich nicht mehr veränderten Information dennoch mit einem konkreten Zeitstempel, bspw. dem I-nitialisierungswert "1" antworten kann.

Indem Gruppen von Ableitungsregeln bei der Änderung einer davon umfaßten Ableitungsregel einen gemeinsamen, neuen Aktualitäts- oder Zeitstempel erhalten, kann die Gesamtheit der abzuspeichernden Aktualitäts- oder Zeitstempel reduziert werden, wodurch sich der Speicherplatzbedarf in der Zentraleinheit einer speicherprogrammierbaren Steuerung reduziert. Dies kann bei umfangreichen Steuerungsalgorithmen wichtig sein, damit die Steuerungsanlage nicht an hardwarebedingte Grenzen des vorhandenen Speichers stößt. Der damit verbundene Mehraufwand, dass bei der Änderung eines einzigen Diagnosenetzwerks sämtliche Elemente der betreffenden Gruppe jeweils aktualisiert werden, ist demgegenüber von geringerer Bedeutung.

Eine weiter Optimierung lässt sich dadurch erreichen, dass die Speicheradresse einer Liste aller Anfangsadressen der Ableitungsregeln an einer unveränderlichen Stelle der Zentraleinheit für die angeschlossenen Bedienungsgeräte auslesbar hinterlegt ist. Durch diese Maßnahme ist unabhängig von der ggf. bei einer Modifikation des Steuerprogramms sich ändernden Speicherbelegung in der Zentraleinheit stets eine unveränderliche Einstiegsadresse geschaffen, anhand der ein Bedienungsgerät sich in dem Speicher der Zentraleinheit zurechtfinden kann, um zunächst genau den für ein Diagnosenetzwerk relevanten Zeitstempel, anschließend ggf. das aktuellere Diagnosenetzwerk selbst und schließlich auch die betreffenden Signalerstwerte finden und auslesen zu können. Ob es sich hierbei um absolute Adressen oder um auf die dem Bedienungsgerät bekannte Einstiegsadresse bezogene Offsetwerte handelt, ist hierbei unerheblich, sofern sich jedenfalls die absolute Speicheradresse zweifelsfrei bestimmten lässt.

Mit großem Vorteil ist jede Ableitungsregel in einen Operatorenteil und einen Operandenteil gegliedert. Eine derartige Notation bietet den Vorteil, dass mit einer einzigen, bspw. in einem Verwaltungsblock hinterlegten Information über die Anzahl der Operatoren einer Diagnoseanweisung durch Interpretation der abgespeicherten Operatorensymbole die Struktur der betreffenden Diagnosefunktion festgelegt ist, während andererseits die in diese Funktion einzusetzenden Erstwerte anhand der in dem zweiten Teil der betreffenden Diagnoseanweisung hinterlegten (relativen) Adressen über eine indirekte Adreßierung unschwer gefunden werden können. Wird hierfür bspw. für jeden Operator in dem Speicherplatz ein Byte reserviert, so lassen sich insgesamt 256 verschiedene Operationen der betroffenen Eingangssignale realisieren, so dass auch komplexere Funktionen der betroffenen Erstwerte für das betreffende Bediengerät zweifelsfrei erkenntlich gemacht werden können.

Schließlich entspricht es der Lehre der Erfindung, dass die einer Ableitungsregel entsprechenden Signalerstwerte in einer entsprechenden Zusammenstellung innerhalb einer Erstwertliste mit in ähnlicher Form adressierbaren Datensätzen gespeichert sind. Die Erfindung sieht solchenfalls vor, für jede Diagnoseanweisung die zu deren Auswertung erforderlichen Erstwerte bitweise in einem vorzugsweise zusammenhängenden Speicherbereich zusammenzustellen, so dass nur ein entsprechender, zusammenhängender Speicherbereich aus der Zentraleinheit des betreffenden Steuerungsgerätes an ein Bedienungsgerät übertragen werden muss. Darüber hinaus ist solchenfalls die Möglichkeit geschaffen, die Operandenliste zu verkürzen, da ggf. nur die Adresse des ersten Bits der relevanten Erstwerte erforderlich ist und die übrigen Signal-Erstwerte anhand eines jeweils zu inkrementierenden Offsets gefunden werden können. Eine Reduzierung der Operandenadressen für die unterschiedlichen Diagnosefunktionen ist aber gleichbedeutend mit einer u. U. erheblichen Reduzierung des Speicherbedarfs für die zentrale Abspeicherung der Diagnosenetzwerke in der Zentraleinheit der speicherprogrammierbaren Steuerung. Andererseits können individuelle Operandensymbole dennoch wichtig sein, um den anhand der Erstwerte identifizierten, fehlerauslösenden Signaleingangswert exakt kenntlich zu machen und insbesondere in einer für das Wartungspersonal verständlichen Form auf dem Bedienungsgerät anzeigen zu können. Aus diesem Grunde wird man in den meisten Fällen nicht auf die vollständige Adressierung sämtlicher Operanten eines Diagnosenetzwerks verzichten können.

Weitere Merkmale, Einzelheiten, Vorteile und Wirkungen auf der Basis der Erfindung ergeben sich aus der nachfolgenden Beschreibung eines bevorzugten Ausführungsbeispiels der Erfindung sowie anhand der Zeichnung. Hierbei zeigt:
Fig. 1 ein Blockschaltbild einer erfindungsgemäßen, speicherprogrammierbaren Steuerung;
Fig. 2 einen Signalflußplan für die Einspeicherung einer Initial-Programmierung in eine erfindungsgemäße, speicherprogrammierbare Steuerung;
Fig. 3 einen Signalflußplan für die Einspeicherung eines modifizierten Steuerungscodes samt Zusatzinformationen in eine erfindungsgemäße, speicherprogrammierbare Steuerung;
Fig. 4 die Struktur der in der Zentraleinheit hinterlegten Daten;
Fig. 5 ein schematisches Struktogramm über die von einem Bedienungsgerät nach dem erfindungsgemäßen Verfahren durchführbare Fehlerdiagnose; sowie
Fig. 6 die unterschiedlichen Bildschirmdarstellungen auf einem Bedienungsgerät während der Meldung, Diagnose und Behebung eines Fehlers.

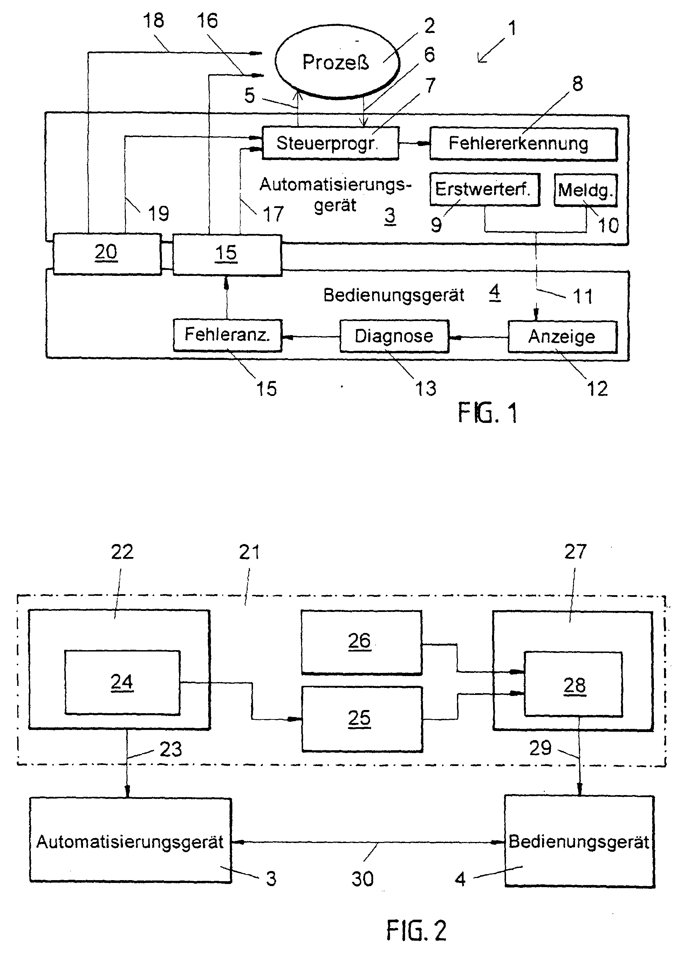

In Fig. 1 ist schematisch die Aufgabenverteilung bei der Erkennung, Diagnose und Behebung eines Fehlers in einem von einer speicherprogrammierbaren Steuerung 1 gesteuerten Prozeß 2 auf das eigentliche Automatisierungsgerät 3 und ein daran angeschlossenes Bedienungsgerät 4 wiedergegeben. Das Automatisierungsgerät 3 steuert über eine Ausgangsschnittstelle 5 im Normalbetrieb den Prozeß 2 und erhält mittels Sensoren eine Rückkopplung 6 über den aktuellen Zustand des Prozesses 2. Während dieses Normalbetriebs wird ein in dem Automatisierungsgerät 3 hinterlegter Steuerungscode 7 zyklisch abgearbeitet, wobei im Rahmen eines Fehlererkennungsprogrammms 8 ständig eine Überwachung kritischer Bedingungen vorgenommen wird.

Wurde in einem Arbeitszyklus des Automatisierungsgerätes 3 ein Fehler erkannt 8, so werden noch in demselben Zyklus sämtliche Eingangs-, Zwischen- und Ausgangssignale in einen Speicher für die weitere Auswertung übertragen (Erfassung sog. Erstwerte 9). Außerdem wird eine entsprechende Fehlermeldung erzeugt 10, an das Bedienungsgerät 4 übertragen 11 und dort visuell angezeigt 12. Ferner ist das Bedienungsgerät 4 in die Lage versetzt, auf Anforderung seitens einer Wartungsperson oder ggf. auch automatisch eine Analyse des eingetretenen Fehlers durchzuführen 13, wobei die abgespeicherten Erstwerte 9 als Informationsquelle verwendet werden. Die solchermaßen ermittelte Fehlerursache wird anschließend angezeigt 14.

Daraufhin ist das Wartungspersonal aufgerufen, den angezeigten Fehler zu beheben 15, was entweder manuell geschehen kann 16 oder über eine geeignete Steuerung 17 mittels des Steuergeräts 3. Ist dies geschehen, kann der Prozeß 2 wieder anlaufen, wozu von dem Wartungspersonal ggf. nach Quittierung der Fehlermeldung 12 die von dem Prozeß 2 benötigten, manuellen Einstellungen 18 wie auch der Neustart 19 des Steuerprogramms 7 von dem Wartungspersonal vorzugeben 20 sind.

Wie man sieht, ist im Rahmen einer derartigen Fehlerbehebungsroutine dem Bedienungsgerät 4 neben der reinen Anzeige 12, 14 von Informationen und der Eingabe 15, 20 von Steuerbefehlen auch die Fehlerdiagnose 13 übertragen. Hierzu müssen dem Bedienungsgerät 4 neben den Erstwerten 9 auch weitere Informationen über den Prozeß 2 bzw. das Steuerprogramm 7 und/oder das Fehlererkennungsprogramm 8 zur Verfügung stehen, um aus der reinen Fehlermeldung 10 die eigentliche Fehlerursache in dem aktuellen Fall bestimmen zu können.

Diese Informationen werden zusammen mit dem Steuerprogramm 7 erzeugt und in einer Initialisierungsphase in die Komponenten 3, 4 der speicherprogrammierbaren Steuerung 1 eingespeichert, wie in Fig. 2 dargestellt ist. Die Erstellung des Quellcodes für das Steuerprogramm 7 wie auch weiterer Informationen wird auf einem Projektierungscomputer 21 vorgenommen. Zunächst wird mit einem speziellen Programm 22 der Quellcode für das Steuerprogramm 7 erzeugt, in einen maschinenlesbaren und optimierten Code umgesetzt und in die Zentraleinheit 3 der speicherprogrammierbaren Steuerung 1 geladen 23. Dieses Steuerungsprogramm 7 kann eine durch den Prozeß 2 weitgehend bestimmte, äußerst komplexe Struktur aufweisen, die für eine Fehlerdiagnose nicht geeignet ist. Deshalb wird im Rahmen des Programms 22 aus dem Quellcode des Steuerprogramms 7 ein für die Fehlerdiagnose 13 optimierter Code 24 erstellt und ohne Kompilierung in einer sog. Normalform zwischengespeichert 25. Parallel hierzu werden von dem Projekteur Meldetexte, - symbole etc. für die Behandlung von Fehlermeldungen eingegeben und ebenfalls abgespeichert 26. Aus diesen abgespeicherten Informationen 25, 26 wird im Rahmen eines weiteren Programms 27 ein für das Bedienungsgerät 4 geeigneter Code 28 erstellt und sodann in das Bedienungsgerät 4 geladen 29.

Diese anfängliche Programmierung des Bediengerätes 4 ist bei späteren Programmänderungen nicht mehr erforderlich, da die hierbei geänderten Daten direkt von der Zentraleinheit 3 der speicherprogrammierbaren Steuerung 1 bspw. über eine serielle Schnittstelle 30 gelesen werden können. Zu diesem Zweck wird der für die Fehlerdiagnose optimierte Quellcode von dem betreffenden Programmeditor 24 bei der Initialisierung der Zentraleinheit 3 der speicherprogrammierbaren Steuerung 1 ebenfalls geladen 23 und steht nun für spätere Abfragen 30 zur Verfügung.

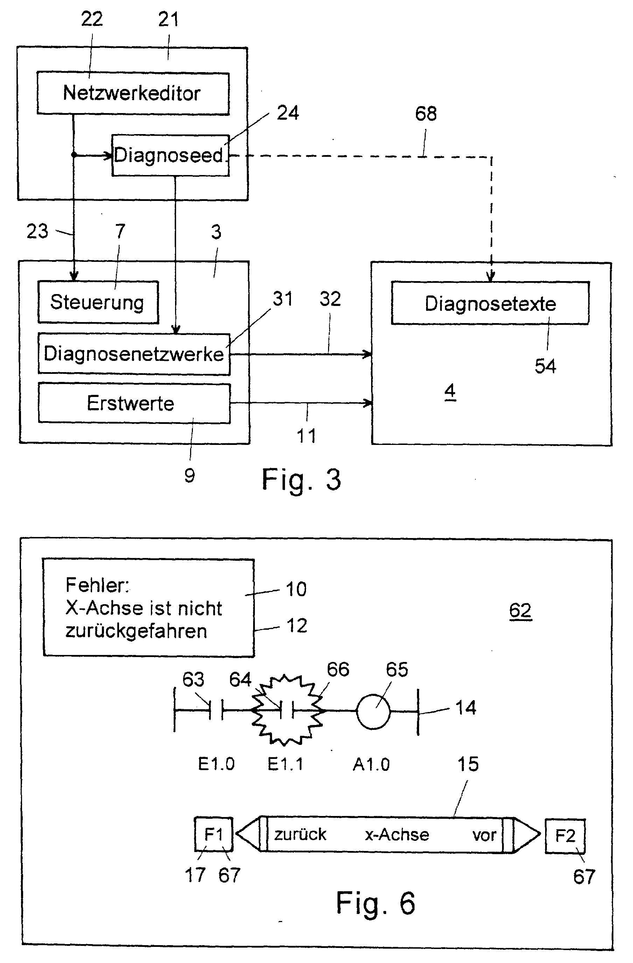

Nun wird die betreffende Anlage 1, 2 in Betrieb genommen, und in den meisten Anwendungsfällen werden sich nach einiger Zeit Probleme einstellen, die eine Modifizierung des Steuerprogramms 7 erforderlich machen. Diese Modifikation wird anhand des Quellcodes für das Steuerprogramm 7 auf dem Projektierungscomputer 21 vorgenommen, wobei es sich auch um ein tragbares Programmiergerät handeln kann. Der modifizierte und sodann kompilierte Steuercode 7 wird abermals in die Zentraleinheit 3 der speicherprogrammierbaren Steuerung 1 geladen 23, wie dies in Fig. 3 links wiedergegeben ist. Anschließend wird mit dem Diagnoseeditor 24 der für die Fehlerdiagnose optimierte Code aus dem Quelltext 22 des Steuerprogramms gewonnen. Im Gegensatz zu der Initialisierungsprogrammierung gemäß Fig. 2 wird dieser Code jedoch nicht in ein Bediengerät 4 übertragen, sondern in Form von sog. Diagnosenetzwerken 31 in der Zentraleinheit 3 der speicherprogrammierbaren Steuerung 1 hinterlegt. Von dort können alle angeschlossenen Bedienungsgeräte 4 sich die modifizierten Diagnosenetzwerke 31 bei Bedarf beschaffen 32, um neben den ebenfalls aus der Zentraleinheit 3 auslesbaren 11 Erstwerten 9 sämtliche für die Fehlerdiagnose 13 erforderlichen und aktuell gültigen Informationen zu erhalten. Evtl. modifizierte Anzeigetexte, Symbole etc. können nach wie vor direkt in das Bediengerät 4 eingespeichert 68 werden, da derartige Änderungen sehr selten sind.

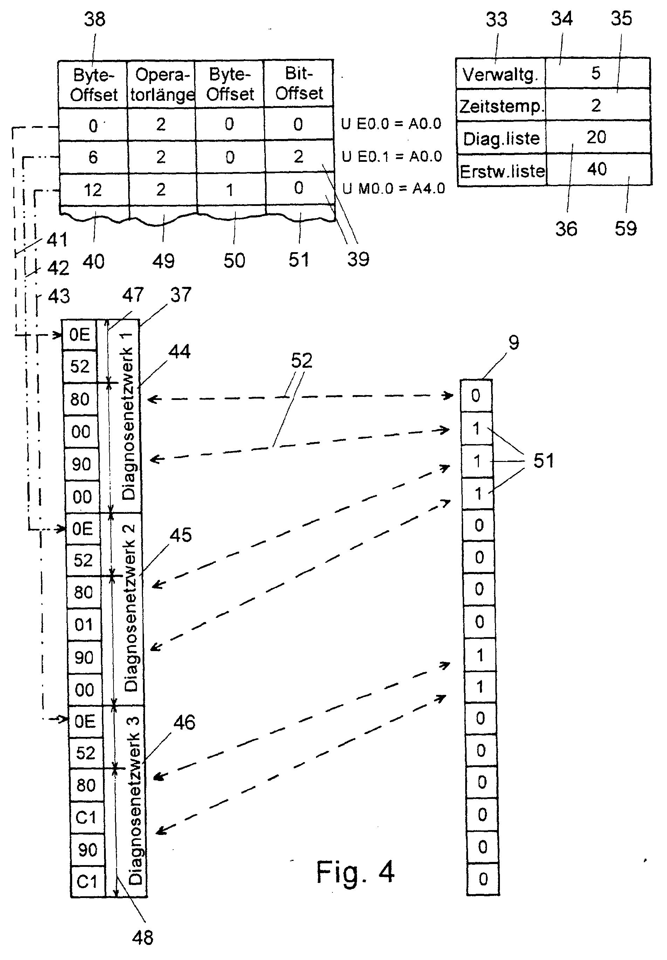

Damit die Bediengeräte 4 problemlos sowohl auf die zentral abgespeicherten Diagnosenetzwerke 31 wie auch auf die Erstwerte 9 zugreifen können, erfolgt die Hinterlegung der Diagnosenetzwerke 31 wie auch der Erstwerte 9 in der Zentraleinheit 3 der speicherprogrammierbaren Steuerung 1 nach einem exakt vorgegebenen System, das in Fig. 4 skizziert ist. Zusätzlich wird mit jeder Meldung eines Fehlers 10 ein entsprechendes Fehlerattribut an das Bedienungsgerät 4 übertragen 11, anhand dessen das Bedienungsgerät 4 die für die betreffende Fehlermeldung erforderlichen Diagnoseinformationen finden kann.

Vorzugsweise sind verschiedene Fehlermeldungen anhand ihrer Attribute in einzelne Gruppen zusammengefaßt, wobei durch eine in dem Bedienungsgerät 4 abgespeicherte Zuordnungstabelle ohne weiteres für jedes Fehlermeldungsattribut die betreffende Gruppe herausgefunden werden kann. Ferner ist in dem Bedienungsgerät 4 zu jeder Fehlermeldungsgruppe eine Adresse des Speichers der Zentraleinheit 3 hinterlegt, und unter dieser Adresse findet das Bedienungsgerät 4 in dem Speicher der Zentraleinheit 3 einen Informationsblock 33, wo in einer ebenfalls exakt vorgegebenen Reihenfolge bestimmte Informationen zu finden sind. An einen Verwaltungsinformationen enthaltenen Teil 34 schließt sich ein Speicherplatz 35 an, wo Informationen über die jüngste Änderung eines Diagnosenetzwerks 31 der betreffenden Gruppe eingetragen sind, ferner findet sich hier eine Startadresse oder ein Offset zu der Startadresse der Liste 37 aller Diagnosenetzwerke 31 der betreffenden Gruppe, und schließlich eine weitere Startadresse 38 zu dem Beginn des Erstwertspeichers 9.

Anhand des Gruppenattributs findet das Bedienungsgerät 4 demnach den für die betreffende Fehlermeldungsgruppe reservierten Speicherbereich 37 mit den Diagnosenetzwerken 31 und auch die Erstwertliste 9. Andererseits sind in diesen Listen 9, 37 eine Reihe von Diagnosenetzwerken bzw. -anweisungen samt zugeordneter Erstwerte eingetragen, und deshalb ist die weitere Verwaltungstabelle 38 vorgesehen, deren Startadresse anhand des Verwaltungs-Informationsblocks 34 auffindbar ist. In der Verwaltungstabelle 38 ist für jedes Diagnosenetzwerk 31 der betreffenden Gruppe ein Verwaltungsdatensatz 39 angelegt, wobei an der ersten Stelle jedes Datensatzes 39 ein Offsetwert 40 gespeichert ist, der durch Addition mit der Adresse 36 für die Startadresse der Netzwerkliste 37 die exakte Startadresse 41 - 43 des betreffenden Diagnosenetzwerks enthält. Jedes Diagnosenetzwerk 44 - 46 ist in einen Operatorenteil 47 und einen Operandenteil 48 unterteilt. Die Länge des jeweils vorangestellten Operatorenteils 47 ist in dem Verwaltungsdatensatz 39 abgespeichert 49. Hierbei handelt es sich sozusagen um einen Offsetwert, der zusammen mit dem relativen Offsetwert 40 und der Startadresse 36 für die Diagnosenetzwerkliste 37 die jeweilige Startadresse des Operandenteils 48 festlegt. Ein weiterer Eintrag 50 in dem Verwaltungsdatensatz 39 enthält einen byteweisen Offsetwert, der durch Addition mit der Startadresse 59 für die Erstwertliste 9 das dem betreffenden Diagnosenetzwerk 44 - 46 entsprechende Erstwertsegment in der Erstwertliste 9 byteweise adressiert. Ein letzter Eintrag 51 zu jedem Verwaltungsdatensatz 39 enthält Informationen darüber, an welchem Bit des betreffenden, durch den Eintrag 50 definierten Bytes das mit dem aktuellen Diagnosenetzwerk korrespondierende Erstwertsegment beginnt.

Solchermaßen ist jedem Operator, der bspw. die Bedeutung von "UND", "ODER", "=", usf. haben kann, je ein Byte zugeordnet, so dass insgesamt 256 verschiedene Operatoren voneinander unterschieden werden können. Eine Operandenadresse besteht jeweils aus zwei Byte, die in zwei aufeinanderfolgenden Speicherplätzen in der Diagnosenetzwerkliste 37 enthalten sind.

Vorzugsweise ist jedem Operator ein Operand, und wiederum jedem Operanden ein Bit aus der Erstwertliste 9 zugeordnet 52.

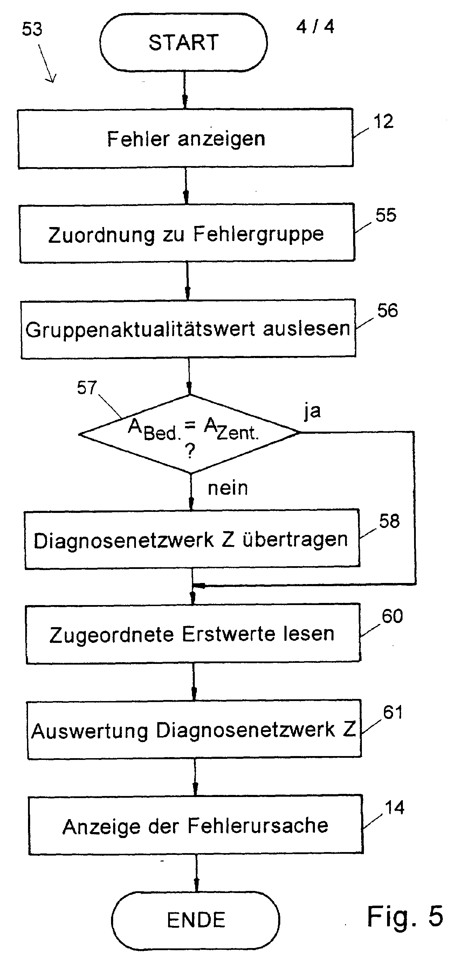

Die Vorgehensweise des Bedienungsgerätes 4 bei der Fehlerdiagnose 13 erfolgt anhand des in Fig. 5 schematisch wiedergegebenen Struktogramms 53. Nach Eintreffen 11 einer Fehlermeldung 10 kann das Bedienungsgerät 4 anhand des übertragenen Fehlerattributes den betreffenden Meldetext 26, 54 ermitteln und sodann anzeigen 12. Sodann kann automatisch die Fehlerdiagnose 13 durchgeführt werden, wobei zunächst anhand des übertragenen Fehlerattributs eine Gruppenzuordnung 55 vorgenommen wird.

Sodann wird aus dem dieser Fehlermeldungsgruppe entsprechenden Informationsblock 33 der Zentralbaugruppe 4 die dort abgespeicherte Aktualitätsstufe 35 ausgelesen 56 und mit einem zu der betreffenden Fehlermeldung in dem Bedienungsgerät 4 hinterlegten Aktualitätskennzeichen verglichen 57, um festzustellen, ob das Bedienungsgerät 4 im Hinblick auf diese aktuelle Fehlermeldung den aktuellen Stand des Diagnosenetzwerks aufweist oder sich diesen aktuellen Stand erst aus der Zentraleinheit 3 beschaffen 30 muss. Ergibt sich bei diesem Aktualitätsvergleich 56, 57, dass in dem Bedienungsgerät 4 nicht die aktuelle Fassung des relevanten Diagnosenetzwerks enthalten ist, so wird nun zunächst anhand der oben erläuterten Adressierungsmethode der betreffende Eintrag aus der Diagnosenetzwerkliste 37 ausgelesen und in dem Bedienungsgerät 4 gespeichert 57. Wurde bei dem Aktualitätsvergleich 56, 57 dagegen festgestellt, dass in dem Bedienungsgerät 4 zum Zeitpunkt des Fehlereintritts bereits das aktuelle Diagnosenetzwerk hinterlegt war, so kann dieser Schritt 58 übersprungen werden.

In jedem Fall wird als nächstes ebenfalls anhand des Informations- und des Verwaltungsblockes 33, 38 das benötigte Erstwertsegment 9 ermittelt und von der Zentraleinheit 3 in das Bedienungsgerät 4 übertragen 60.

Nun hat das Bedienungsgerät 4 alle für die Fehlerdiagnose 13 relevanten Daten und kann anhand des dem betreffenden Fehlermeldungsattribut entsprechenden Diagnosenetzwerks und der zugeordneten Erstwerte, die jeweils durch eine mit dem Attribut korrespondierende Ordnungszahl innerhalb der betreffenden Meldungsgruppe eingeordnet und durch den dieser Ordnungszahl entsprechenden Datensatz 39 der betreffenden Verwaltungstabelle 59 identifizier- und adressierbar sind, ausgewertet 61.

Die Anzeige 14 der solchermaßen gefundenen Fehlerursache kann auf dem Bildschirm 62 des Bedienungsgerätes 4 bspw. in Form einer Kontaktplandarstellung 14 erfolgen, wobei die für die Generierung der aktuellen Fehlermeldung 10 in Frage kommenden Eingangssignale 63, 64 zusammen mit dem daraus resultierenden Ausgangs- oder Fehlersignal 65 nach Art eines Schaltplans verknüpft sind. Die Kennzeichnung der Fehlerursache erfolgt sodann durch eine Hervorhebung 66 des eigentlich verursachenden Eingangssignals 64, bspw. durch Wiedergabe dieses Elements in einer anderen Farbe, durch Hinzusetzen eines Fehler-, bspw. Blitzsymbols, od. dgl.

Anhand dieser Fehlerursache 64 kann sodann der Fehler behoben werden 15, wobei eine manuelle Eingabe 17 an einer bspw. als Schaltfläche 67 realisierten Eingabemöglichkeit des Bedienungsgerätes 4 erfolgen kann.

## Patentansprüche

1. Verfahren zur Verringerung des Aufwandes im Fall einer Modifikation des Steuerungscodes (7) für die Zentraleinheit (3) einer speicherprogrammierbaren Steuerung (1) mit wenigstens einem angeschlossenen Bedienungsgerät (4), von dem bei einer Fehlermeldung (10) eine Diagnose (13) hinsichtlich der Fehlerursache (64) durchführbar ist, **dadurch gekennzeichnet, dass** in der Zentraleinheit (3) zusätzliche Informationen (31, 37) über den Steuerungscode (7) hinterlegt sind und insbesondere bei einer Fehlermeldung (10) von einem angeschlossenen Bedienungsgerät (4) auslesbar (30, 58) sind, um die Fehlerursache (64) zu ermitteln.

2. Verfahren nach Anspruch 1, **dadurch gekennzeichnet, dass** die zusätzlichen Informationen (31, 37) den logischen und/oder mathematischen Verknüpfungen des Steuerungscodes (7) inhaltlich entsprechen.

3. Verfahren nach Anspruch 1 oder 2, **dadurch gekennzeichnet, dass** die zusätzlichen Informationen (31, 37) die Abhängigkeit eines Ausgangs- insbesondere Meldesignals (65) von den Eingangssignalen (63, 64) enthalten.

4. Verfahren nach einem der vorhergehenden Ansprüche, **dadurch gekennzeichnet, dass** jeder Änderung der zusätzlichen Informationen (31, 37) ein Zeitstempel (35) zugeordnet wird.

5. Verfahren nach einem der vorhergehenden Ansprüche, **dadurch gekennzeichnet, dass** von einem Bediengerät (4) beim Eintreffen einer Fehlermeldung (10) die dem betreffenden Fehlersignal (65) zugeordneten Zusatzinformationen (44 - 46), insbesondere dessen Abhängigkeit von den Eingangssignalen (63, 64), ausgelesen (30, 58) werden können, um durch eine Auswertung (13) anhand der in dem Rechenzyklus, in welchem der Fehler (10) erstmals aufgetreten ist, abgespeicherten Signalwerte (Erstwerte 9) die Fehlerursache (64) ermitteln zu können.

6. Verfahren nach einem der vorhergehenden Ansprüche, **dadurch gekennzeichnet, dass** beim Eintreffen einer Fehlermeldung (10) anhand einer zugeordneten Kennzahl die Ordnungszahl der entsprechenden Ableitungsregel (44 - 46) von den Eingangssignalen (63, 64) ermittelt wird.

7. Verfahren nach einem der vorhergehenden Ansprüche, **dadurch gekennzeichnet, dass** anhand der Ordnungszahl der gesuchten Ableitungsregel (44 - 46) der entsprechende, in dem Bedienungsgerät eingetragene Aktualitätsoder Zeitstempel mit einem diesbezüglich in der Zentraleinheit (3) eingetragenen Aktualitäts- oder Zeitstempel (35) verglichen (57) wird.

8. Verfahren nach einem der vorhergehenden Ansprüche, **dadurch gekennzeichnet, dass** bei Identität der miteinander verglichenen Aktualitäts- oder Zeitstempel (35) die bereits in dem Bedienungsgerät (4) abgespeicherte Ableitungsregel zur Auswertung (13) der Fehlermeldung (10) anhand der Erstwerte (9) herangezogen wird.

9. Verfahren nach einem der vorhergehenden Ansprüche, **dadurch gekennzeichnet, dass** bei einer Diskrepanz zwischen den miteinander verglichenen Aktualitätsoder Zeitstempeln (35) die (aktuellere) Ableitungsregel (44 - 46) aus der Zentraleinheit (3) gelesen (58) wird.

10. Verfahren nach einem der vorhergehenden Ansprüche, **dadurch gekennzeichnet, dass** bei dem Auslesen (58) einer Ableitungsregel (44 - 46) aus der Zentraleinheit (3) deren Aktualitäts- oder Zeitstempel (35) in das Bedienungsgerät (4) übernommen wird.

11. Verfahren nach einem der vorhergehenden Ansprüche, **dadurch gekennzeichnet, dass** bei der erstmaligen Programmierung aller Systemkomponenten (3, 4) die für eine Meldungsauswertung (13) erforderlichen Ableitungsregeln (44 - 46) direkt in alle Bedienungsgeräte (4) geladen (29) werden.

12. Verfahren nach einem der vorhergehenden Ansprüche, **dadurch gekennzeichnet, dass** Gruppen (37) von Ableitungsregeln (44 - 46) bei der Änderung einer davon umfaßten Ableitungsregel (44 - 46) einen gemeinsamen, neuen Aktualitäts- oder Zeitstempel (35) erhalten.

13. Verfahren nach einem der vorhergehenden Ansprüche, **dadurch gekennzeichnet, dass** die Speicheradresse einer Liste (59) aller Anfangsadressen (40) sämtlicher Ableitungsregeln (44 - 46) an einer unveränderlichen Stelle der Zentraleinheit (3) für die angeschlossenen Bedienungsgeräte (4) auslesbar (30) hinterlegt ist.

14. Verfahren nach einem der vorhergehenden Ansprüche, **dadurch gekennzeichnet, dass** jede Ableitungsregel (44 - 46) in einen Operatorenteil (47) und einen Operandenteil (48) gegliedert ist.

15. Verfahren nach einem der vorhergehenden Ansprüche, **dadurch gekennzeichnet, dass** die einer Ableitungsregel (44 - 46) entsprechenden Signalerstwerte in einer entsprechenden Zusammenstellung innerhalb einer Erstwertliste (9) mit in ähnlicher Form adressierbaren (50, 51) Datensätzen gespeichert sind.
